# EUROPEAN PATENT APPLICATION

(11) **EP 1 578 126 A2**
(43) Date of publication of application: **21.09.2005**
(21) Application number: 05102231.7
(22) Date of filing: 21.03.2005
(51) Int. Cl.: H04N 5/92

(54) **Method and apparatus for handling metadata**

(30) Priority: 19.03.2004 US 805031
(71) Applicant: MICROSOFT CORPORATION, Washington 98052 (US)
(72) Inventor: Zigmond, Daniel J., Redmond, WA Washington 98052 (US); Carle, Kevin T., Redmond, WA Washington 98052 (US); Scott III, Samuel Thomas, Redmond, WA Washington 98052 (US)
(74) Representative: Zimmer, Franz-Josef

(57) **Abstract**

A system records a video program (304) as well as metadata associated with the video program (306). The system then receives updated metadata associated with the video program (308). The previously recorded metadata is replaced with the updated metadata (312).

## Description

### TECHNICAL FIELD

The systems and methods described herein relate to managing metadata associated with content, such as program content.

### BACKGROUND

A client device in a television-based system can receive data, such as video data and audio data from a program distributor in the form of broadcast programs, such as news programs, sitcoms, movies, sporting events, commercials, and any other type of television-based information. Video data and audio data may also be referred to as video content and audio content, respectively. A client device includes, for example, a set-top box, a digital satellite receiver, a cable box, a digital video recorder (DVR), and a television with a built-in receiver.

Various program data is available to identify programs scheduled to be broadcast to viewers. This program data can be referred to as "metadata". The metadata associated with one or more programs may include information displayed in a program guide such as program title, channel, and time of broadcast. Metadata is typically associated with programs that will be broadcast at a future time, such as programs scheduled to be broadcast during an upcoming week. Programs that have already been broadcast may be recorded on a DVR or other device. Metadata associated with these recorded programs may also be recorded on the same DVR or other device. This recorded metadata is accurate as of the time the broadcast of the associated program began. Often, this metadata is incorrect or incomplete. For example, the duration of a program may be different than the scheduled information due to the program being preempted or running longer than expected.

When a user searches through numerous stored programs, metadata is useful in locating programs of interest to the user. Using metadata that is not accurate or complete may prevent the user from finding a desired program or may identify programs that are not of interest to the user due to the inaccurate or incomplete metadata used in the search. Thus, the use of inaccurate or incomplete metadata can result in a frustrating and undesirable user experience.

### SUMMARY

The systems and methods described herein manage metadata associated with various content. In a particular embodiment, a video program is recorded along with metadata associated with the video program. Upon receiving updated metadata associated with the video program, the previously recorded metadata is replaced with the updated metadata.

### BRIEF DESCRIPTION OF THE DRAWINGS

Similar reference numbers are used throughout the figures to reference like components and/or features.
Fig. 1 illustrates various components of an example architecture capable of providing content to one or more client devices.
Fig. 2 illustrates an example display device and an example client device capable of generating a listing of recorded programs for display on the display device.
Fig. 3 is a flow diagram illustrating an embodiment of a procedure for recording programs and recording metadata associated with the programs.
Fig. 4 is a flow diagram illustrating an embodiment of a procedure for displaying previously recorded programs.
Figs. 5-8 illustrate examples of scheduled programs and the resulting programs that are actually broadcast.
Fig. 9 is a flow diagram illustrating an embodiment of a procedure for generating a listing of programs available for viewing.
Fig. 10 is a flow diagram illustrating an embodiment of a procedure for handling updated metadata received from a data provider.
Fig. 11 illustrates an example listing of programs available for viewing.
Fig. 12 illustrates example metadata associated with a program prior to broadcasting the program as well as updated metadata associated with the program after the broadcast is completed.
Fig. 13 illustrates a television-based system that includes an example client device.

### DETAILED DESCRIPTION

The systems and methods described herein manage metadata associated with various content, such as television programs, video-on-demand (VOD), and advertisements. These systems and methods maintain timestamps associated with various metadata to enable metadata to be updated or refreshed after it has been delivered. A version number or other identifier may be used in place of a timestamp to differentiate different between metadata. For example, when a client device accesses a content server or other device, the content server delivers updated metadata to the client device. Similarly, a data provider can provide updated metadata to a server - the metadata being associated with content stored by the server or accessible to the server. This updated metadata can correct inaccuracies or incomplete data in previous versions of the metadata, thereby improving the results of a user's search for programs of interest.

Television broadcasting systems (such as cable TV broadcasters or satellite broadcasters) originate and communicate signals to customers from a headend (or "head-end"). The headend contains equipment to broadcast signals and provide other services to multiple customers. A headend interacts with the client devices to provide content that is appropriate for the client device based on the settings, preferences and account information associated with the client device. The content may be provided to the client devices using any communication method, any communication protocol, and any communication medium.

The systems and methods discussed herein are described with reference to an environment in which content (and metadata associated with the content) is distributed to client devices via a data communication network, such as the Internet. These examples represent one possible environment in which the systems and methods can be implemented. In other embodiments, any type of system or architecture can be used to provide content to one or more client devices. The content distributed to client devices can be any type of data, such as television programs, video-on-demand, advertisements, program data, metadata, and the like. Metadata may be any data related to any type of content. Metadata examples include a program title, broadcast date and time, program rating, program duration, program description, program commentary, program awards, and the like.

Client devices of the type discussed herein range from clients with substantial memory and processing resources, such as television-enabled personal computers and television recorders equipped with hard-disks, to clients with little or no memory and/or limited processing resources. Although particular examples of client devices are discussed herein, any client device can be used with the systems and methods described. Example client devices include personal computers, DVD players, digital video recorders (DVRs), set top boxes, cable boxes, satellite receivers, televisions, game consoles, and the like. As used herein, the term "user" may also be referred to as "viewer".

Although particular examples discussed herein are related to the broadcast of video content such as television programs, the systems and methods described herein can be applied to any type of content. Other types of content include radio broadcasts, streamed audio and/or video data, an XML stream of stock price data that can be converted to an on-screen ticker, and the like. Additionally, an application that runs on a server and displays information on a client device coupled to the server may use metadata to describe services offered by the application. For example, initial metadata associated with audio data may identify the audio data as a three hour block of "classical music". Subsequent metadata information may enhance the description to include, for example, the composer, the symphony performing the music, and the historical significance of the music.

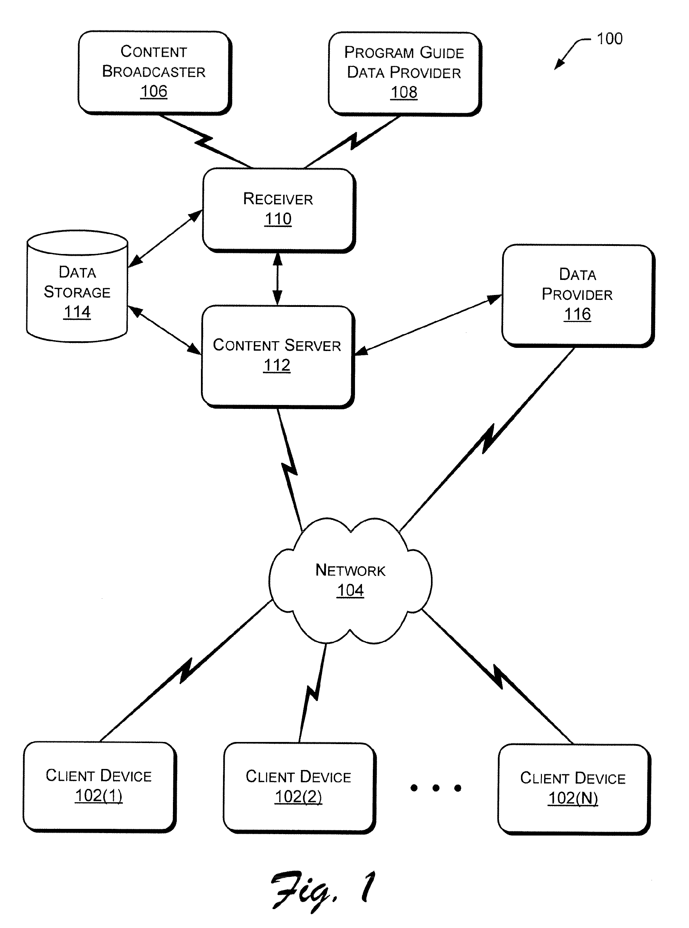

Fig. 1 illustrates various components of an example architecture 100 capable of providing content to one or more client devices 102. In this example architecture 100, content (such as television programs, video-on-demand, advertisements, and the like) is distributed via a data communication network 104, such as the Internet. Architecture 100 provides two-way communication of data between client devices and one or more servers or other devices via network 104. In alternate embodiments, content is distributed to client devices 102 via a cable network, radio frequency signals, over-the-air broadcast, satellite communicaton systems, and the like.

In a particular embodiment, client devices 102 communicate with one or more servers via network 104 using simple object access protocol (SOAP) messages transported using hypertext transfer protocol (http), a protocol commonly used by the World Wide Web. In other embodiments, any type of protocol and/or messaging format can be used to exchange data between client devices 102 and one or more servers.

Although not shown in Fig. 1, each client device 102 may be coupled to a display device (such as a television, computer monitor, or projector), a recording device (such as a VCR or DVR), or other device. Alternatively, one or more client devices 102 may themselves be televisions or recording devices.

In the example of Fig. 1, network 104 may be any type of data communication network and may include two or more different networks, such as a local area network (LAN) and the Internet. A content server 112 is also coupled to network 104. Content server 112 can perform various tasks, such as receiving requests for data or content from client devices 102, providing program listings and content to client devices 102, providing metadata to client devices 102, and the like. A data storage device 114 is coupled to content server 112 and stores various content, program metadata, program listings, and other information used or handled by content server 112. The content stored by storage device 114 includes, for example, video-on-demand (VOD) content, advertisements, and movie trailers.

A receiver 110 is coupled to content server 112 and storage device 114. Receiver 110 receives broadcast content, program guide content, and other data from a variety of sources. For example, receiver 110 can receive broadcast content from a content broadcaster 106 via a cable network, radio frequency signals, over-the-air broadcast, satellite communication systems, or any other communication medium. Although one content broadcaster 106 is shown in Fig. 1, receiver 110 can be coupled to any number of content broadcasters using any number of different communication mediums. Receiver 110 receives program guide information from a program guide data provider 108. Program guide data provider 108 provides information regarding upcoming programs scheduled to be broadcast. This program guide data may be used by content server 112 and may be communicated to one or more client devices 102. Although one program guide data provider 108 is shown in Fig. 1, receiver 110 may be coupled to any number of program guide data providers via any type of communication medium.

A data provider 116 is coupled to content server 112 and to network 104. Data provider 116 provides metadata associated with any number of previously broadcast programs. Data provider 116 may also provide program guide information regarding upcoming programs scheduled to be broadcast (similar to program guide data provider 108). Any number of different data providers 116 may be coupled to content server 112. Various other servers (not shown) may be coupled to content server 112 and/or network 104 to communicate with content server 112 and/or client devices 102.

Traditional television broadcasting systems (such as cable TV broadcasters, over the air broadcasters, or satellite broadcasters) originate and communicate signals to customers from a headend. In the architecture of Fig. 1, the headend may be considered as the equipment used to communicate content and provide other services to multiple customers (e.g., via client devices 102). The headend interacts with the client devices 102 to provide content that is appropriate for the client device based on the settings, preferences, and other information associated with the client device. Referring to Fig. 1, any one or more of the following devices may be considered part of the "headend": content server 112, data storage device 114, and receiver 110. In other embodiments, one or more additional devices may be considered part of the headend.

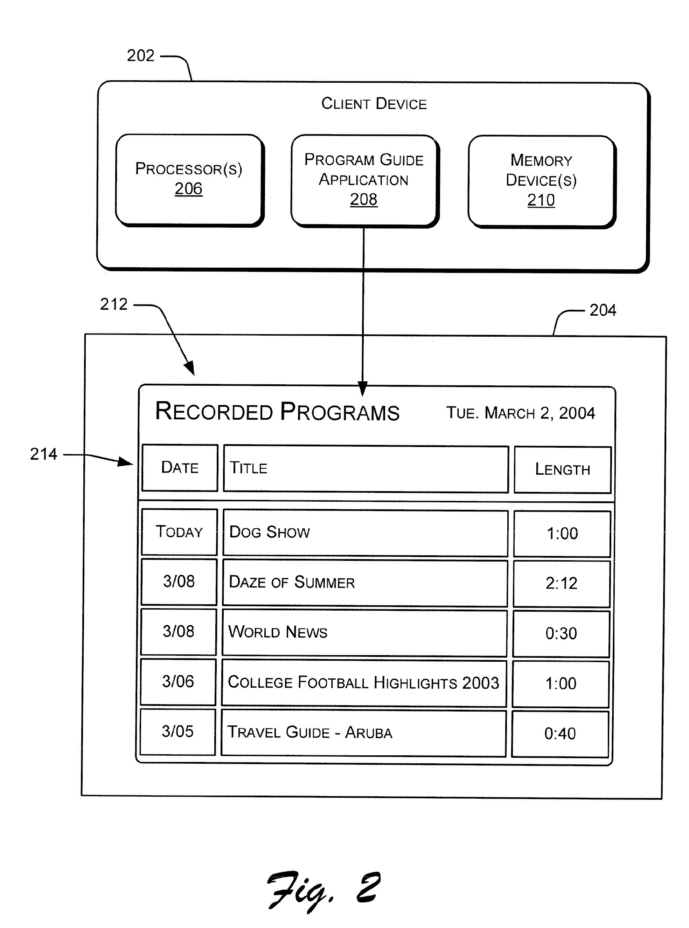

Fig. 2 illustrates an example display device 204 and an example client device 202 capable of generating a listing of recorded programs for display on the display device. Display device 204 includes, for example, a television, a computer monitor, a projector, and the like. Client device 202 receives content from a content server (e.g., content server 112 in Fig. 1) or other content provider. Client device 202 includes one or more processors 206, a program guide application 208, and one or more memory devices 210. Processor(s) 206 include, for example, microprocessors and controllers, which process various instructions to control the operation of client device 202 and to communicate with other devices. Memory device(s) 210 may be implemented, for example, as a disk drive, a random access memory (RAM), a read-only memory (ROM), or a flash memory. Client device 202 may use memory device(s) 210 to store received programs, program schedule information, program metadata, configuration information, and the like.

Program guide application 208 executes on processor(s) 206 and can be stored as computer-executable instructions in non-volatile memory (not shown) or client device 202. Program guide application 208 generates a recorded program guide 212 that can be displayed on display device 204. For example, recorded program guide 212 may be displayed in the on-screen display (OSD) layer generated by client device 202. Alternatively, recorded program guide 212 can be displayed in another layer generated by client device 202, such as the video layer. Although program guide application 208 is illustrated and described herein as a single application configured to generate recorded program guide 212, program guide application 208 can be implemented as multiple component applications distributed such that each performs one or more functions.

Recorded program guide 212 allows a viewer to see what programs have been recorded by client device 202 and/or other devices, and are available for viewing. In one embodiment, recorded program guide 212 operates in an interactive mode in which the information displayed in recorded program guide 212 is manipulated by pressing control buttons (e.g., arrow buttons) on a remote control device or other input device. Alternatively, program guide application 208 may generate a program guide that identifies programs that are scheduled to be broadcast on particular channels at particular times.

In the example of Fig. 2, recorded program guide 212 displays information associated with five previously recorded programs in a grid arrangement. In alternate embodiments, information associated with previously recorded programs can be arranged in any manner, and may include textual information, graphical information, or any other information associated with the programs. A header 214 identifies the type of data displayed in the grid below the header, such as the date the program was recorded, the title of the recorded program, and the length of the recorded program. Information regarding the five previously recorded programs is displayed below header 214. A viewer may interact with the recorded program guide 212 to scroll the guide to display information regarding other recorded programs and/or display additional information associated with the recorded programs. In alternate embodiments, recorded program guide 212 may display information associated with any number of recorded programs. Further, alternate embodiments may display different information (e.g., program description or program rating) associated with the recorded programs.

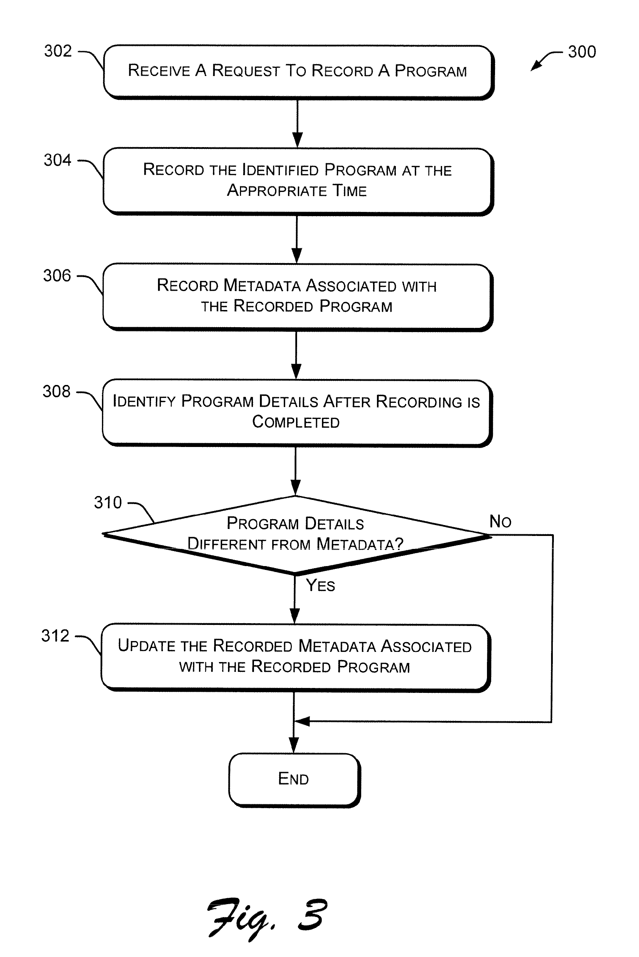

Fig. 3 is a flow diagram illustrating an embodiment of a procedure 300 for recording programs and recording metadata associated with the programs. Initially, a request is received to record a program (block 302). For example, the request may be generated by a viewer through an electronic program guide (EPG) presented to the viewer through a client device. Alternatively, the request may be generated in response to an advertisement for the program, or by the viewer entering a channel and time period associated with the program to be recorded. In a particular embodiment, a viewer merely presses a "Record" button on a remote control device to begin recording the currently tuned channel.

The requested program is recorded at the appropriate time (block 304). If the record time is in the future, the device automatically tunes to the appropriate channel and begin recording at the designated time. The program may be recorded by the client device, such as a DVR or a VCR. Metadata associated with the recorded program is also recorded (block 306) by the client device or other recording device. Alternatively, the program and/or the metadata associated with the program may be recorded on a separate device coupled to the client device via a communication link, such as a network communication link.

After recording of the program is complete, procedure 300 identifies program details associated with the recorded program (block 308). For example, the procedure may retrieve metadata associated with the recorded program from a content server, a data provider, or other data source. Alternatively, the procedure may identify program details (such as the actual duration of the recorded program) based on the recorded program itself or based on information received along with the program content. At block 310, the procedure determines whether the program details identified after the program is complete differ from the metadata previously recorded in block 306. If so, procedure 300 updates the previously recorded metadata with the new metadata identified after recording of the program is complete (block 312).

In a particular embodiment, the metadata associated with the recorded program is stored on the same device as the recorded program. In other embodiments, the metadata associated with the recorded program is stored on a separate device, such as a separate storage device or a separate client device.

In one embodiment, program content and associated metadata is stored on a DVR. When recording certain programs, such as sporting events, that may have a variable program length, the DVR typically records for a period of time that exceeds the scheduled program length. For example, if a football game is scheduled for three hours, the DVR may record an additional hour (four hours total) to be sure the entire game is recorded if the length of the game exceeds three hours. However, if the game duration is less than four hours, unwanted content is stored on the DVR, which uses valuable storage space. In this situation, the updated metadata may indicate the exact length (e.g., duration in hours, minutes, and/or seconds) of the game. The DVR can then delete any content recorded after the game ended, thereby releasing storage space for other program content.

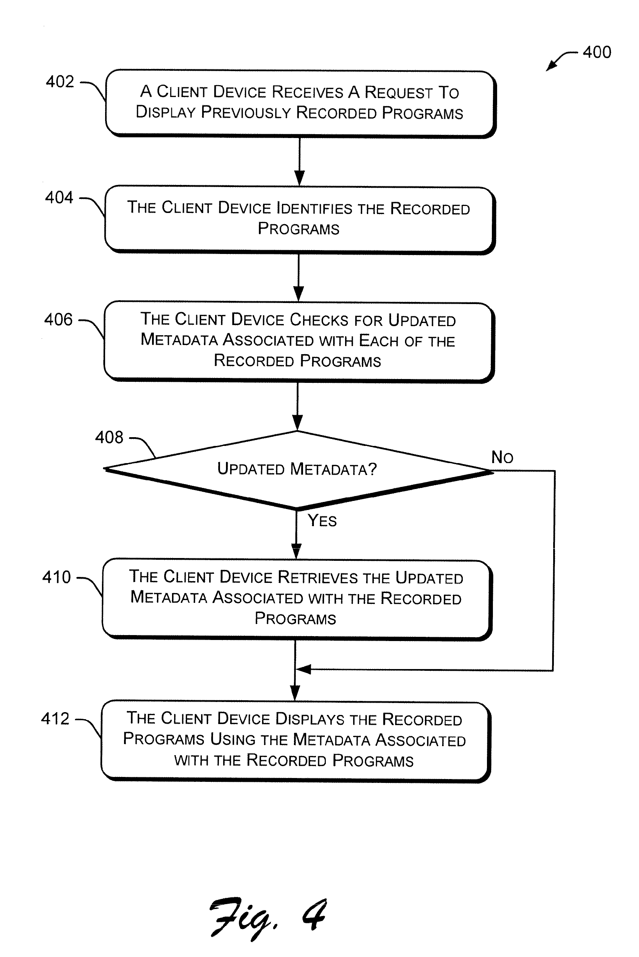

Fig. 4 is a flow diagram illustrating an embodiment of a procedure 400 for displaying previously recorded programs. Initially, a client device receives a request to display previously recorded programs (block 402). These previously recorded programs may be stored on the client device or on another device coupled to the client device. The client device identifies the recorded programs available for viewing (block 404). The identified programs may include all recorded programs stored on the client device. The client device then checks for updated metadata associated with each of the recorded programs (block 406). Alternatively, the client device may check for updated metadata associated with the recorded programs to be displayed to the viewer. For example, if an initial listing of ten programs will be displayed to the user, the client device may check for updated metadata associated with those ten programs.

If updated metadata is available for one or more of the recorded programs (block 408), the client device retrieves the updated metadata associated with the recorded programs (block 410). The client device then displays the recorded programs using the metadata associated with the recorded programs (block 412). Updated metadata may include revised information regarding a program, such as a revised program length (shorter or longer than originally scheduled) or an updated program rating (e.g., from TV-14 to TV-M, or from previously unrated to TV-Y). Updated metadata may also include additional data regarding a program, such as the results of a sporting event, awards received after the program is broadcast, and the like. The display of recorded programs may be similar to the listing of recorded programs shown in Fig. 2.

A client device and/or a content server may purchase updated metadata related to one or more programs (or categories of programs), or may subscribe to a metadata update service that provides updated metadata on a regular basis. In one embodiment, a client device accesses a content server periodically (e.g., daily) to receive updated metadata. Similarly, the content server can periodically access a data provider to receive updated metadata. In other embodiments, a client device automatically receives metadata updates from the content server. Similarly the content server can automatically receive metadata updates from the data provider.

Figs. 5-8 illustrate examples of scheduled programs and the resulting programs that are actually broadcast. For example, Fig. 5 illustrates a scheduled broadcast of programs 502 on a particular channel during a particular time period (2:00 pm - 5:00 pm). This scheduled broadcast information is available prior to the program broadcast (e.g., via an electronic program guide or other source of program information). The actual broadcast of programs 504 shows that the actual broadcast of programs was different from the scheduled broadcast information. For example, Program A ran for 1.5 hours instead of 1.0 hour and Program B was shortened from 1.0 hour to 0.5 hours. This situation may occur, for example, when Program A is a sporting event (or other live event) that has a variable ending time. In the example of Fig. 5, Program A ran longer than anticipated and the broadcaster shortened the duration of Program B to compensate (e.g., joining Program B "already in progress"). The actual broadcast of Program C was consistent with the scheduled broadcast information. In situation of Fig. 5, it is desirable to update the program metadata associated with Program A and Program B after the programs are broadcast so that a future display of recorded program listings is generated accurately. If the recorded program listing relies on old metadata (e.g., the scheduled broadcast information), the recorded program listing will be generated with inaccurate data. Applications, such as a program search application, rely on the accuracy of the metadata to produce quality search results. Similarly, applications such as a DVR application rely on the accuracy of the metadata to manage disk storage space.

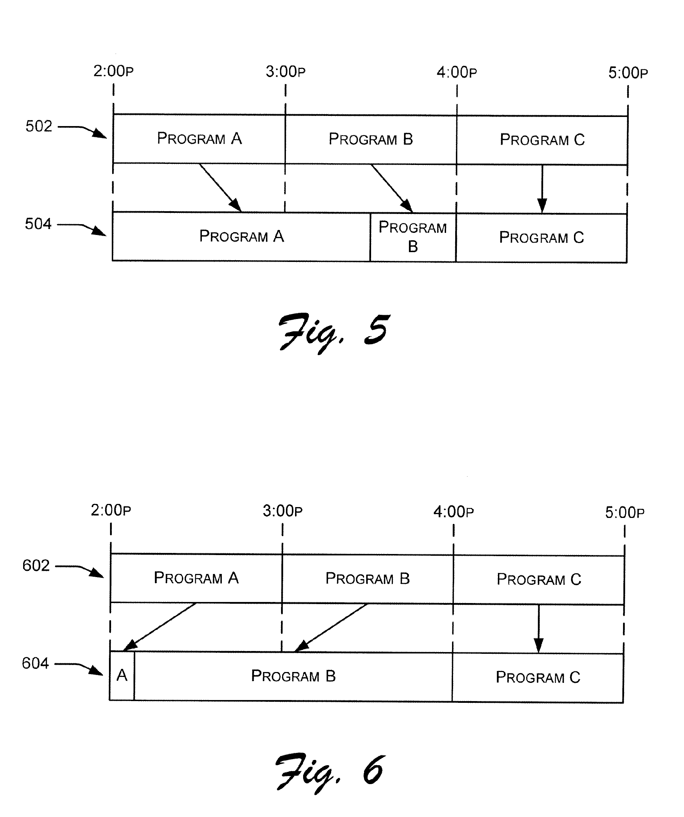

Fig. 6 illustrates a scheduled broadcast of programs 602 on a particular channel during a particular time period and an actual broadcast of programs 604 showing that the actual broadcast of programs was different from the scheduled broadcast information. In this example, the duration of Program A was much shorter than indicated by the scheduled broadcast information. This may occur due to a cancelled event (e.g., a rained-out baseball game) or a problem retrieving, handling, or broadcasting the scheduled program. In this situation, Program B started early and ran for a longer duration. The actual broadcast of Program C was consistent with the scheduled broadcast information.

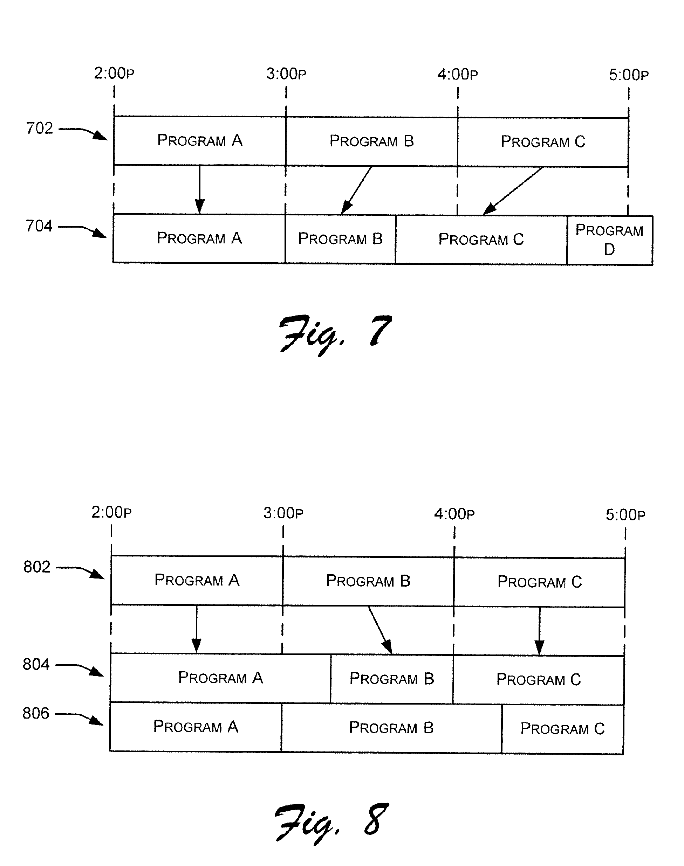

Fig. 7 illustrates a scheduled broadcast of programs 702 on a particular channel during a particular time period and an actual broadcast of programs 704 showing that the actual broadcast of programs was different from the scheduled broadcast information. In this example, the actual broadcast of Program A was consistent with the scheduled broadcast information. However, the actual duration of Program B was shorter than indicated in the scheduled broadcast information. Additionally, due to the shortened length of Program B, Program C started earlier than indicated in the scheduled broadcast information. An additional program (Program D) was broadcast after Program C. The broadcast of Program D was not indicated in the scheduled broadcast information. For example, Program D may have been selected to fill the time created by the shortened length of Program B. This selection of Program D may have been made without any advance notice to viewers, broadcasters, or other individuals or entities.

Fig. 8 illustrates a scheduled broadcast of programs 802 on a particular channel during a particular time period. In this example, conflicting program metadata was received regarding the actual broadcast of programs. A first set of metadata 804 indicates that Program A ran longer than scheduled and Program B was shortened accordingly. This first set of metadata 804 also indicates that Program C was consistent with the scheduled broadcast information. A second set of metadata 806 indicates that Program A was consistent with the scheduled broadcast information, but Program B ran longer than scheduled. Additionally, the duration of Program C was shortened to adjust for the additional length of Program B.

In the example of Fig. 8, the two different sets of metadata 804 and 806 may have been generated by different data providers, or generated at different times (e.g., the correct metadata was generated at a later time after the correct broadcast information was verified). In one embodiment, conflicts between two or more sets of metadata can be resolved by selecting the metadata with the most recent timestamp and discarding the other metadata. In another embodiment, both sets of metadata are maintained and information from both sets of metadata is displayed, for example, in an available program listing simultaneously. In a further embodiment, all conflicting sets of metadata are ignored, which may result in "voids" in an available program listing until a corrected set of metadata is received. In another embodiment, data providers may be assigned a relative ranking, such as a letter grade from A to F. Data providers with higher letter grades are assumed to have more accurate and complete information in cases where conflicts exist.

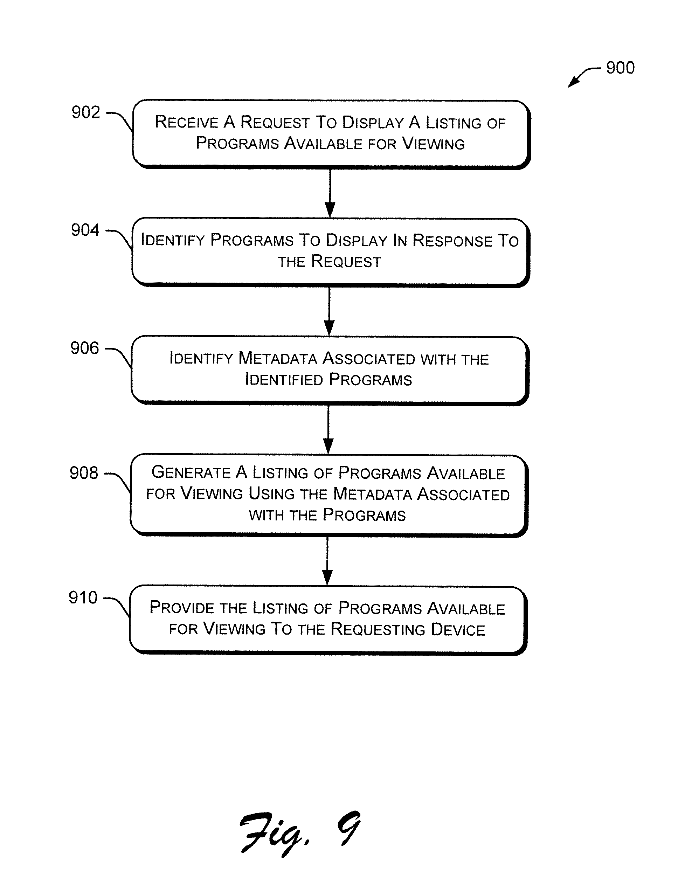

Fig. 9 is a flow diagram illustrating an embodiment of a procedure 900 for generating a listing of programs available for viewing. Initially, a request is received to display a listing of programs available for viewing (block 902). This request may be received, for example, by a client device, a content server, or other device. The request may specify a particular type of program (sports, movies, etc.), a particular rating (G or TV-14), one or more keywords, or other information to filter the programs displayed. The procedure then identifies programs to display in response to the request (block 904), e.g., using the filtering information specified in the request. Procedure 900 then identifies metadata associated with the identified programs (block 906). This metadata may be stored locally on, for example, the client device or may be stored on a content server or other device. The metadata associated with a particular program may include information generated after the program was broadcast, such as a final score, reviews of the program, or commentary regarding the program.

The procedure continues by generating a listing of programs available for viewing using the metadata associated with the programs (block 908). Finally, the generated listing of programs available for viewing is provided to the requesting device (block 910). This listing of programs may include some or all of the metadata associated with the programs. For example, a summary of the program may be displayed, but there may be insufficient space to display an entire commentary. In this example, a viewer could activate a "Full Commentary" button included in the available program guide to display the entire commentary associated with a particular program.

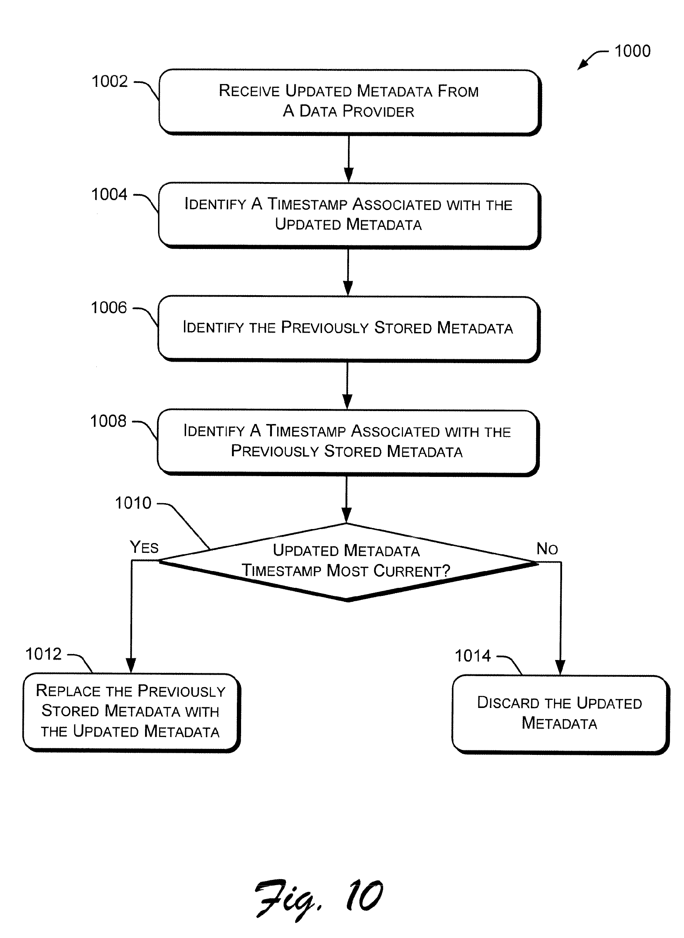

Fig. 10 is a flow diagram illustrating an embodiment of a procedure 1000 for handling updated metadata received from a data provider. Procedure 1000 may be implemented by a client device, a content server, or other device. Initially, the procedure receives updated metadata from a data provider (block 1002). The procedure then identifies a timestamp associated with the updated metadata (block 1004). The timestamp may be a date and/or time of publication, a revision number, or other indicator of a unique version associated with the metadata. Procedure 1000 continues by identifying the previously stored metadata (block 1006), i.e., the most current metadata received prior to receiving the updated metadata in block 1002. The procedure also identifies a timestamp associated with the previously stored metadata (block 1008). Next, a determination is made regarding whether the timestamp associated with the updated metadata is more current than the timestamp associated with the previously stored metadata (block 1010). If the timestamp associated with the updated metadata is more current than the timestamp associated with the previously stored metadata, then the previously stored metadata is replaced with the updated metadata (block 1012). However, if the timestamp associated with the updated metadata is older than the timestamp associated with the previously stored metadata, the updated metadata is discarded (block 1014), thereby maintaining the previously stored metadata as the current metadata used by the system.

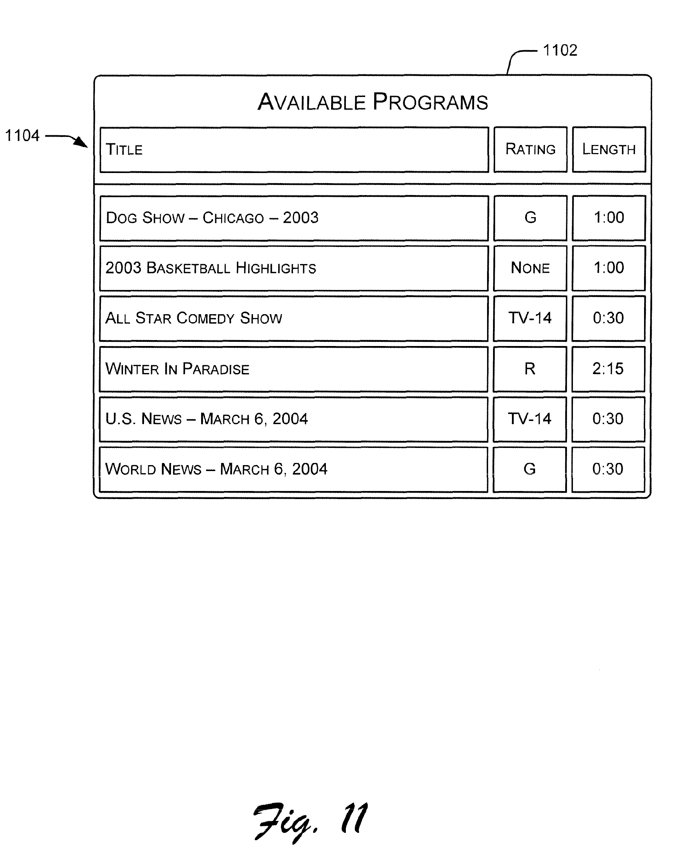

Fig. 11 illustrates an example listing of programs available for viewing 1102. Available programs listing 1102 displays programs that are available for viewing as well as additional information about those programs, such as a rating associated with the program and the length of the program. In one embodiment, available programs listing 1102 operates in an interactive mode in which the displayed information can be manipulated by pressing control buttons (e.g., arrow buttons) on a remote control device or other input device.

In the example of Fig. 11, available programs listing 1102 displays information associated with six programs in a grid arrangement. A header 104 identifies the type of data displayed in the grid below the header, such as the title of the program, a rating associated with the program, and the length of the program. Information regarding the six programs is displayed in the grid below header 1104. A viewer may interact with the available programs listing 1102 to scroll the guide to display information regarding other programs available for viewing and/or display additional information associated with the recorded programs. In alternate embodiments, available programs listing 1102 may display information associated with any number of recorded programs. Further, alternate embodiments may display different information (e.g., program description or program awards) associated with the programs.

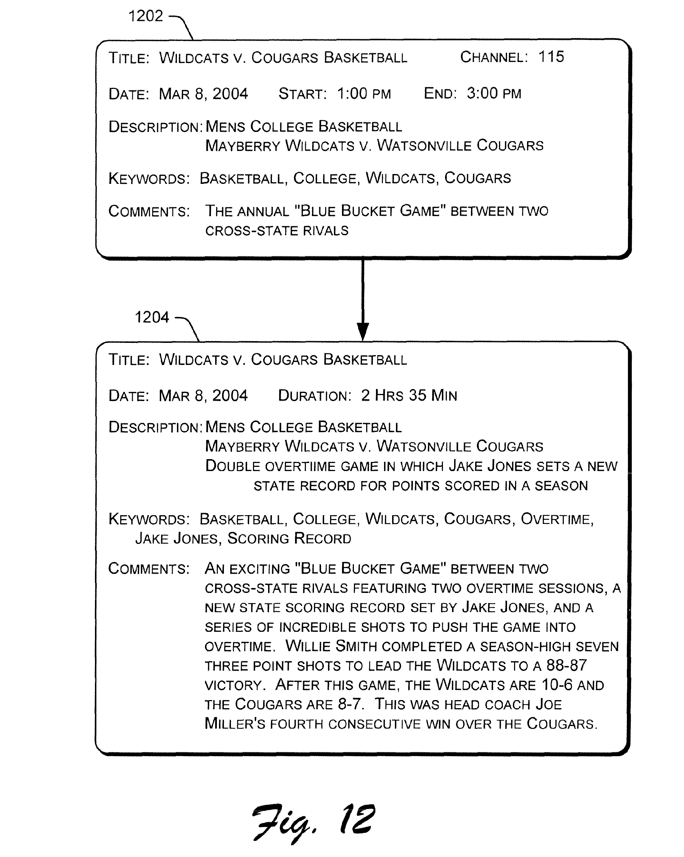

Fig. 12 illustrates example metadata associated with a program prior to broadcasting the program as well as updated metadata associated with the program after the broadcast is completed. A first set of metadata 1202 is an example of metadata that may be available prior to the broadcast of a program. Metadata 1202 includes a title of the program, a broadcast channel, the date and time of the program's broadcast, a brief description of the program, a few keywords associated with the program and a short comment regarding the program. Such information is typical for a program that has yet to be broadcast. Metadata 1202 may be stored in a database, a content server, a client device, or any other device. The metadata can be stored in any format using any data structure.

Metadata 1204 includes additional information and updated information as compared to metadata 1202. For example, the program was a basketball game that had two overtime sessions, which caused the program to run longer than scheduled. Metadata 1204 correctly identifies the length of the program as 2 hours 35 minutes whereas metadata 1202 identifies the scheduled length of 2 hours. Additional information regarding the game is included in metadata 1204, such as the game being a double overtime game, the winner of the game, a player setting a new scoring record, as well as other highlights and comments that are available after the game is finished. Metadata 1204 may be further updated at a future time to include additional information regarding the program, such as having the program added to a "100 best games of 2004" list or adding further comments or reviews of the program that are released at a later time.

Metadata 1202 and 1204 represent examples of the types of metadata that may be associated with a program. In other embodiments, any type of data can be associated with a particular program. Further, metadata can be updated and/or revised at any time prior to the broadcast of the program, during the broadcast of the program, or after the broadcast of the program.

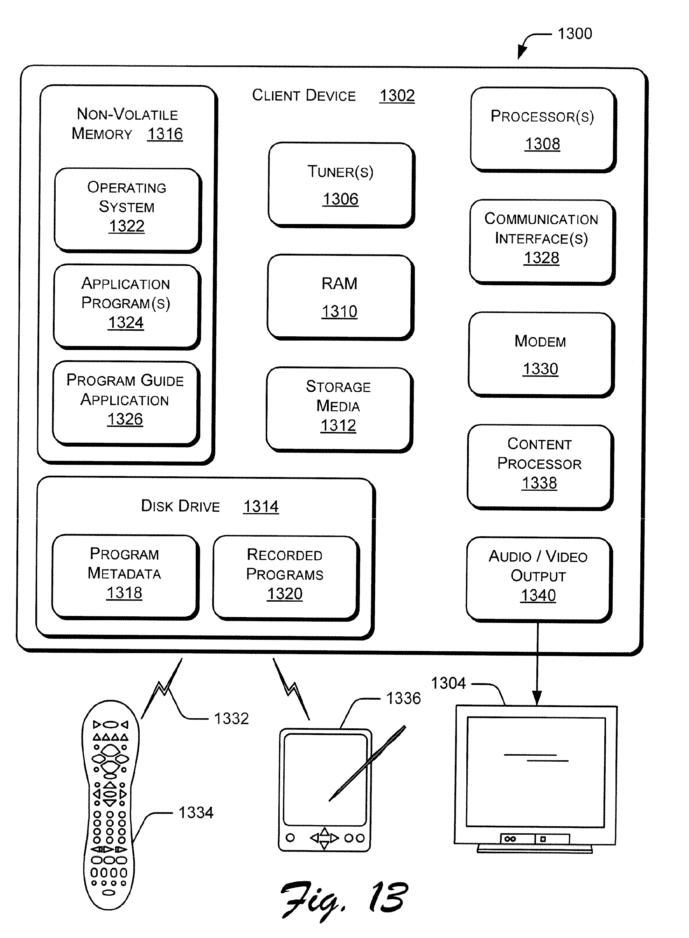

Fig. 13 illustrates a television-based system 1300 that includes an example client device. System 1300 also includes a display device 1304 to display, for example, video content, recorded program listings, available program listings, and other data. Client device 1302 can be implemented as a set-top box, a satellite receiver, a TV recorder with a hard disk, a digital video recorder (DVR) and playback system, a game console, an information appliance, and as any number of similar embodiments.

Client device 1302 includes one or more tuners 1306 which are representative of one or more in-band tuners that tune to various frequencies or channels to receive television signals, as well as an out-of-band tuner that tunes to the broadcast channel over which program data is broadcast to client device 1302. Tuners 1306 may include hardware-based tuners and/or digital tuners capable of "tuning" or identifying IP-based digital streams of data. IP-based digital streams serve a similar function as tuners, but are used in an IP environment for the delivery of content (e.g., the unicast delivery of content). Client device 1302 also includes one or more processors 1308 (e.g., any of microprocessors, controllers, and the like) which process various instructions to control the operation of client device 1302 and to communicate with other electronic and computing devices.

Client device 1302 can be implemented with one or more memory components, examples of which include a random access memory (RAM) 1310, mass storage media 1312, a disk drive 1314, and a non-volatile memory 1316 (e.g., ROM, Flash, EPROM, EEPROM, etc.). Disk drive 1314 can include any type of magnetic or optical storage device, such as a hard disk drive, a magnetic tape, a rewriteable compact disc, a DVD, and the like. The one or more memory components store various information and/or data such as received content, program metadata 1318, recorded programs 1320, configuration information for client device 1302, and/or graphical user interface information. Alternative implementations of client device 1302 can include a range of processing and memory capabilities, and may include any number of differing memory components than those illustrated in Fig. 13. For example, full-resource clients can be implemented with substantial memory and processing resources, whereas low-resource clients may have limited processing and memory capabilities.

An operating system 1322 and one or more application programs 1324 can be stored in non-volatile memory 1316 and executed on processor(s) 1308 to provide a runtime environment. A runtime environment facilitates extensibility of client device 1302 by allowing various interfaces to be defined that, in turn, allow application programs 1324 to interact with client device 1302. The application programs 1324 can include a browser to browse the Web (e.g., "World Wide Web"), an email program to facilitate electronic mail, a program to display and search for available programs and video-on-demand content, and any number of other application programs.

A program guide application 1326 that executes on processor(s) 1308 is also stored in non-volatile memory 1316 and is implemented to generate a program guide for display. Using program guide application 1326, the viewer can look at schedules of current and future programming, set reminders for upcoming programs, and/or enter instructions to record one or more programs.

Client device 1302 further includes one or more communication interfaces 1328 and a PSTN, DSL, cable, or other type of modem 1330. A communication interface 1328 can be implemented as a serial and/or parallel interface, as a wireless interface, and/or as any other type of network interface. A wireless interface enables client device 1302 to receive control input commands 1332 and other information from a user-operated input device, such as from a remote control device 1334 or from another infrared (IR), 802.11, Bluetooth, or similar RF input device. Input devices can include a wireless keyboard or another handheld input device 1336 such as a personal digital assistant (PDA), handheld computer, wireless phone, or the like. A network interface and a serial and/or parallel interface enables client device 1302 to interact and communicate with other electronic and computing devices via various communication links. Modem 1330 facilitates client device 1302 communication with other electronic and computing devices via a conventional telephone line, a DSL connection, cable, and/or other type of connection.

Client device 1302 also includes a content processor 1338 which can include a video decoder and/or additional processors to receive, process, and decode broadcast video signals and program data, such as NTSC, PAL, SECAM, or other television system analog video signals, as well as DVB, ATSC, or other television system digital video signals. For example, content processor 1338 can include an MPEG-2 or MPEG-4 (Moving Pictures Experts Group) decoder that decodes MPEG-encoded video content and/or image data. The systems described herein can be implemented for any type of video encoding format as well as for data and/or content streams that are not encoded.

Typically, video content and program data includes video data and corresponding audio data. Content processor 1338 generates video and/or display content that is formatted for display on display device 1304, and generates decoded audio data that is formatted for presentation by a presentation device, such as one or more speakers (not shown) in display device 1304. Content processor 1338 can include a display controller (not shown) that processes the video and/or display content to display corresponding images on display device 1304. A display controller can include a graphics processor, microcontroller, integrated circuit, and/or similar video processing component to process the images.

Client device 1302 also includes an audio and/or video output 1340 that provides the audio, video, and/or display signals to television 1304 or to other devices that process and/or display, or otherwise render, the audio and video data. Video signals and audio signals can be communicated from client device 1302 to television 1304 via an RF (radio frequency) link, S-video link, composite video link, component video link, or other similar communication link.

Although shown separately, some of the components of client device 1302 may be implemented in an application specific integrated circuit (ASIC). Additionally, a system bus (not shown) typically connects the various components within client device 1302. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

## Claims

1. A method comprising:
recording a video program;
recording metadata associated with the video program;
receiving updated metadata associated with the video program; and
replacing the previously recorded metadata with the updated metadata.

2. A method as recited in claim 1 further comprising requesting updated metadata associated with the video program periodically.

3. A method as recited in claim 1 further comprising requesting updated metadata associated with a plurality of video programs at regular intervals.

4. A method as recited in claim 1 further comprising requesting updated metadata associated with the video program from a content server.

5. A method as recited in claim 1 further comprising:
receiving a request to display information regarding the video program; and
displaying at least a portion of the information contained in the updated metadata.

6. A method as recited in claim 1 wherein the updated metadata includes information generated after the video program was recorded.

7. A method as recited in claim 1 wherein the updated metadata has an associated timestamp.

8. A method as recited in claim 1 further comprising:
receiving second updated metadata;
determining whether the second updated metadata is more current than the previously received updated metadata;
if the second updated metadata is more current than the previously received updated metadata, then replacing the previously received updated metadata with the second updated metadata.

9. A method as recited in claim 8 further comprising discarding the second updated metadata if the previously received updated metadata is more current than the second updated metadata.

10. A method as recited in claim 1 further comprising communicating the updated metadata to at least one client device.

11. A method as recited in claim 1 wherein the video program includes audio data.

12. One or more computer-readable memories containing a computer program that is executable by a processor to perform the method recited in claim 1.

13. A method comprising:
receiving metadata associated with program content;
providing the received metadata to a plurality of client devices;
receiving updated metadata associated with the program content;
determining whether the updated metadata is more current than the previously received metadata; and
if the updated metadata is more current than the previously received metadata:
replacing the previously received metadata with the updated metadata; and
providing the updated metadata to the plurality of client devices.

14. A method as recited in claim 13 further comprising discarding the updated metadata if the previously received metadata is more current than the updated metadata.

15. A method as recited in claim 13 wherein determining whether the updated metadata is more current than the previously received metadata includes comparing a timestamp associated with the updated metadata to a timestamp associated with the previously received metadata.

16. A method as recited in claim 13 further comprising storing the metadata associated with program content after receiving the metadata.

17. A method as recited in claim 13 further comprising storing the updated metadata if the updated metadata is more current than the previously received metadata.

18. A method as recited in claim 13 further comprising requesting updated metadata associated with the program content periodically.

19. A method as recited in claim 13 wherein the updated metadata includes information generated after the program content was received.

20. One or more computer-readable memories containing a computer program that is executable by a processor to perform the method recited in claim 13.

21. One or more computer-readable media having stored thereon a computer program that, when executed by one or more processors, causes the one or more processors to:
receive a request to display available content;
identify metadata associated with the available content;
determine whether other metadata associated with the available content is more current than the identified metadata;
if the other metadata associated with the available content is more current than the identified metadata, then generate a display of available content using the other metadata; and
if the identified metadata is more current than the other metadata associated with the available content, then generate a display of available content using the identified metadata.

22. One or more computer-readable media as recited in claim 21 wherein timestamps associated with the identified metadata and the other metadata are used to determine whether other metadata is more current than the identified metadata.

23. One or more computer-readable media as recited in claim 21 wherein if the other metadata associated with the available content is more current than the identified metadata, then replacing the identified metadata with the other metadata.

24. One or more computer-readable media as recited in claim 21 wherein the request to display available content is received from a client device coupled to a display device.

25. An apparatus comprising:
a storage device; and
a processor coupled to the storage device, wherein the processor is to record broadcast content and metadata associated with the broadcast content on the storage device, wherein the processor is further to receive updated metadata associated with the broadcast content, and wherein the processor is to replace the previously recorded metadata with the updated metadata if the updated metadata is more current than previously recorded metadata.

26. An apparatus as recited in claim 25 further comprising a communication interface coupled to the processor, wherein the communication interface is to receive updated metadata from a plurality of data providers coupled to the apparatus.

27. An apparatus as recited in claim 25 wherein the processor is further to generate a listing of available content based on metadata stored on the storage device.

28. An apparatus as recited in claim 25 wherein the processor is further to request updated metadata associated with the broadcast content at regular intervals.
